# EUROPEAN PATENT SPECIFICATION

(11) **EP 1 356 190 B1**
(45) Date of publication and mention of the grant of the patent: **26.09.2007**
(21) Application number: 02726986.9
(22) Date of filing: 04.01.2002
(51) Int. Cl.: F01K 23/06, F02C 9/26, C05F 3/00

(54) **PROCESS FOR THE UTILISATION OF ORGANIC MATERIALS IN ENERGY PRODUCTION AND PRODUCTION OF REUSABLE PRODUCTS**
VERFAHREN ZUR VERWENDUNG VON ORGANISCHEN MATERIALIEN BEI DER ENERGIEERZEUGUNG UND ERZEUGUNG VON WIEDERVERWENDBAREN PRODUKTEN
PROCEDE POUR L'UTILISATION DE MATERIAUX ORGANIQUES DANS LA PRODUCTION D'ENERGIE ET PRODUCTION DE PRODUITS REUTILISABLES

(30) Priority: 04.01.2001 DK 200100014; 10.05.2001 DK 200100741
(43) Date of publication of application: 29.10.2003
(73) Proprietor: Johansen, Peter, Skov, 5853 Ørbaek (DK)
(72) Inventor: Johansen, Peter, Skov, 5853 Ørbaek (DK)
(74) Representative: Gregersen, Niels Henrik
(86) International application number: PCT/DK2002/000006
(87) International publication number: WO 2002/053878

(56) References cited:
- WO-A2-88/01681
- US-A- 4 344 847

## Description

### Background of the Invention

The present invention concerns a method for an energy and resource efficient co-production of electricity, heat, fertilisers and water under utilisation of organic material as raw material source, a separation plant in co-production with a steam based energy plant being process-integrated, whereby the separating plant separates the raw material into at least a dry matter fraction and a liquid fraction, as set out in the preamble of claim 1. Hereby an environmental and resource efficient utilisation of organic material, including domestic animal manure for energy production and co-production of reusable products i.a. in the form of fertilisers and water, is achieved.

The invention is based on a process combination of different techniques in a new integrated process whereby there is achieved a total environmental improvement and improvement of the energy and resource utilisation of the supplied organic material.

In order to improve and render the prior art methods more efficient and versatile the present invention discloses a method which is distinguished in that either the separated liquid fraction from the separation plant is heated by the steam based energy plant whereby the ammonia contained therein evaporates or the separated liquid fraction from the separation plant is stripped of ammonia by means of air.

The invention in a further advantageous embodiment combines a biogas plant, a separation plant, a fertiliser manufacturing plant, either individually, in different combinations or as an total unit, with a steam producing energy plant, where organic material, including domestic animal manure, is divided, under simultaneous use for energy production, into lesser and more reusable fractions, which are utilised as constituents in fertiliser manufacturing processes under total support and co-operation of the steam producing energy plant by using different energy and material flow exchange possibilities.

Hereby, the invention gives simultaneous possibility of a common internal utilisation and reuse of products by using exchange between individual sub-processes and systems so that the total plant achieves a higher degree of self-supply in relation to the individual sub-processes viewed in isolation and is capable of utilising products considered as waste products in the isolated operation of individual processes or products with low advantageous recyclability.

The steam producing energy plant may under a process integration assume different functions by itself in relation to other surrounding systems. Either as process plant in other industrial connections, as power plant or as combined heat and power plant with connected steam turbine and district heating system. Besides, the steam producing energy plant may exclusively have the purpose of supporting energy and material flow exchanges to the described plants connected thereto without necessarily having direct energy exchange to the surroundings as a common steam boiler plant.

At the same time, the steam producing energy plant may, independently of the fuel application, advantageously form part of the described process integration.

However, in connection with integration and supplementing there may also be achieved a particular advantage in that the steam boiler of the energy plant may use biomass as fuel, either in the form of solid bio-fuels like straw, wood chips, waste etc., heavily flowing fuels like sludge and the like, or fluid fuels like slurry, oils and the like.

This implies that the total plant, besides energy utilisation of the dry matter fraction separated off through combustion, may achieve a very great flexibility as the plant thereby will be capable of utilising all kinds of organic material for energy production and for making reusable products. Cellulose-containing and less gasification-suited materials may thereby be supplied to the plant for combustion in the bio-boiler, while the biologically convertible and organic materials often combusted with difficulty are supplied to the biogas and/or separation plant.

Thereby, the plant as a whole may handle and utilise organic materials with a dry matter content between 0% and 100%, either through biogas and/or the separation plant, or by directly feeding to the biogas plant.

Furthermore, the plant will be able to utilise an arbitrary composition of animal and vegetable products and waste materials.

This implies that the total plant, besides the internal process integration advantage, may also contribute with an external integration advantage between concerned sectors of society, whereby the plant, in an overall view, may promote a more sustainable development as seen in a environmental, social and corporate economical perspective.

The invention thus concerns a method being peculiar in that either the separated liquid fraction from the separation plant is heated by the steam based energy plant whereby the ammonia contained therein evaporates or the separated liquid fraction from the separation plant is stripped of ammonia by means of air, as set out in the characterising portion of claim 1.

The background art is for example described in US-A-4344847. In the disclosed process the raw material is described as seawater, which is separated and the different fractions used for gaining other energy efficient materials. Another example is disclosed in WO 88/01681 wherein fossil combustible products such as coal or biogas are combusted generating thermal energy, which is transformed for generating mechanical power.

Background of the invention is that in areas with intensive domestic animal productions there are great environmental problems connected with the traditional spreading of manure in connection with vegetable agricultural production.

This is due to the composition of the domestic animal manure not being in accordance with the efficient need of the plants, as the phosphorous content is relatively high whereas there is a deficiency of particularly nitrogen, potassium and sulphur.

The unbalance in the fertiliser composition implies that the manure is either applied until the need of nitrogen is covered, causing an overfertilising with phosphorous, or is applied until the phosphorous need is covered, whereby nitrogen has to be applied afterwards.

Simultaneously, domestic animal manure has the drawback that its content of nitrogen is partly found combined organically, whereby it is not readily accessible for absorption by the plants, and partly is found on dissolved, easily accessible ammonia form with very large evaporative ability.

Consequently, this implies that large parts of the supplied nitrogen ends up as loss by washing out to the groundwater and by evaporation to the atmosphere, respectively.

At the same time, the necessary areas for fertiliser application in areas heavily populated with domestic animals are often not sufficient.

The manure therefore has to be transported to and redistributed on areas with lower domestic animal intensity. In areas heavily populated with domestic animals, an increased demand for farm land therefore arises, which, in spite of rising prices, becomes a necessary condition for domestic animal production.

This influences the total agricultural business with an increasing cost level which on a long view contributes to changing the agricultural structure towards larger and more rational units and thereby further depopulating already scarcely populated areas.

The spreading of domestic animal manure by the agricultural sector thus contributes to a negative environmental, industrial and socio-economic development.

Compared with the environmental problems of the agricultural sector which also comprise considerable emissions of greenhouse-gases in the shape of laughing gas and methane which is released in connection with handling and spreading the domestic animal manure, the energy sector also stands with great environmental problems compared with the goal of the international climate convention imposing national states to contribute via action plans to reduction of greenhouse gas emission, particularly by reduction of CO₂. Increased application of stochastic energy sources for energy purposes by substituting fossil fuels like oil, coal, etc. are significant means against the greenhouse gas emission.

Herein, application and utilisation of e.g. manure for energy production, particularly within local combined heating and power utility, may constitute a very efficient tool for reducing the greenhouse gas emission, as a greenhouse gas reduction through removal of the manure from the farm land by reducing methane and laughing gas development, and furthermore through an efficient use of the manure in the stochastic energy sources by reducing CO₂ through substitution of fossil fuels.

The invention of the process integrated plant combining the steam producing energy plant in the process combinations described with a separation plant containing a biogas plant and a fertiliser producing plant will in an effective way be able to achieve this double action on the greenhouse gas reduction.

Furthermore, the total process integrated plant may utilise the manure and other organic materials, not only for energy purposes and reduction of greenhouse gas emission, but also for fertiliser and other resource recycling purposes. The plant may thus both utilise chemical bonds between the material constituents for energy purposes and simultaneously break down the individual constituent parts in the organic material into recyclable products, particularly in the form of fertilisers and water.

These constituent parts of material may then be combined in the fertiliser producing plant connected thereto in different ratios in close accordance with the need for e.g. plant fertiliser so that a good efficiency may be achieved.

At the same time, the plant may provide stable fertiliser products similar to common commercial fertiliser products, implying that the loss of nutrients through evaporation and washing out is considerably reduced compared with the use of the initial organic material as fertiliser.

The integrated process plant will thereby not only contribute to reduction of greenhouse gas emission, but will also contribute to a significant reduction of the ammonia evaporation and the washing out of nitrogen and phosphorous in the agricultural vegetable production and reduction of the industrial fertiliser production due to the more efficient fertiliser utilisation.

Furthermore, the process integrated plant will add some degrees of freedom for agricultural production as the plant contributes to releasing the animal production from the bond to the farm land. Hereby, the pressure on the land price is reduced so that the land may assume the arable value to the benefit of other agricultural business and the socio-economic level of cost. At the same time, the invention enables alternative applications for less arable areas so that these may e.g. be laid out for recreational purposes and groundwater protection purposes to the benefit of the development of common welfare.

Also, the process integrated plant may in an efficient, flexible way utilise the limited biomass resources for energy purposes as the plant is capable of using all kinds of organic material, whereby it is possible to use the cheapest and least competition exposed products as raw material in the energy production. Thereby is ensured an effective utilisation of the biomass resource for other applications prior to the energy production. The straw, which is normally used directly for energy making, may e.g. be allowed to be used to a greater extent as animal bedding before being supplied to the plant together with the manure for energy production and nutrient utilisation. The process integrated plant thereby contributes indirectly to solving other social conflicts around the biomass application, such as the dilemma between environment and animal welfare considerations, respectively, and between considerations to ecology and the stochastic energy supply, respectively.

The process integrated plant may thus, as the last link in the chain of use, utilise the organic residue, both for energy purposes and production of nutrient salts for use in regenerating new organic material in a socially sustainable way.

With location in association to district heating areas, the electricity network and the natural gas distribution system, the plant may additionally form part as an element in the infrastructural development of society. The local combined heating and power utility may thus form part of a mutually advantageous structural development with the process integrated plant by a centralised utilisation of the available organic residual material of the area.

In association with the local combined heating and power utility, the plant may not only utilise the manure of the surrounding area and accessible occurrences of biomass for energy purposes, but it may also advantageously form part of integrated processes around waste water treatment and processes around the making of fluid bio fuels like ethanol/methanol for use in e.g. the transport sector.

Due to its flexible application and utilisation possibilities for the accessible organic material, the process integrated plant may thereby also contribute to a more sustainable development of the social structure.

Thus the invention has the purpose, in a technological way, to contribute to an environmentally, socially and corporate economically sustainable production of foodstuffs and energy by utilising organic material, including manure, for energy production and production of recyclable products, inter alia in the shape of fertilisers and water.

Furthermore, the invention has the purpose of contributing to an energy and resource efficient co-production of energy, fertilisers, water and other recyclable products under use of different forms of organic materials.

Simultaneously, the invention aims at a broad and flexible use of organic products which does not compete with alternative applications. Hereby the competitiveness is ensured simultaneously with a number of degrees of freedom are added to the general social welfare development, around environmental conditions, resource utilisation, animal welfare, structural development, etc.

### Brief description of the drawing

The invention will now be explained with reference to the accompanying drawing. The invention is not limited by the descriptive examples, but only by the appended claims.
- Fig. 1: schematically illustrates a total process-integrated plant;
- fig. 2: illustrates a process-integrated plant without a biogas plant;
- fig. 3: illustrates a second alternative process-integrated plant without a biogas plant;
- fig. 4: illustrates an alternative use of the biogas;
- fig. 5: illustrates an alternative set up in connection with the firebox;
- fig. 6: illustrates a biogas upgrading circuit;
- fig. 7: illustrates a wet scrubber gas cleaning process;
- fig. 8: illustrates a multistage distillation process;
- fig. 9: illustrates further process steps for the separated liquid fraction;
- fig. 10: illustrates a scrubber process with addition of acid;
- fig. 11: illustrates a scrubber plant for stripping ammonia;
- fig. 12: illustrates a stabilising/neutralising process installation;
- fig. 13: illustrates a heating and evaporation process installation;
- fig. 14: illustrates an evaporation/cooling stage for water,
- fig. 15: illustrates the combustion air preheating of the steam boiler;
- fig. 16: illustrates a disinfection process stage.

### Detailed description of preferred embodiments

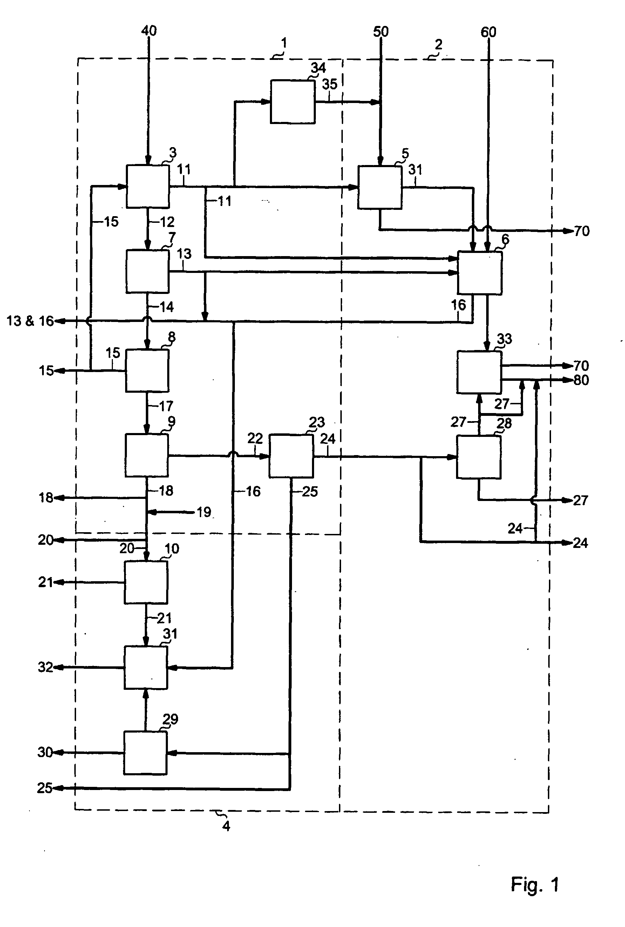

As examples of a total process integrated plant, the following structures and functions may be described as reference is made at the same time to Fig. 1:

Generally speaking, the process comprises two plants functioning in parallel; a separation plant 1 fractionating the supplied organic material into recyclable products and an energy plant 2 utilising the combustible products separated off for production of electricity 70 and heat 80 and contributes in other material and energy exchanges with the purpose of an effective energy utilisation and a minimal resource consumption.

In a further preferred embodiment, the separation plant 1 comprises a biogas plant 3 whereby the supplied material is divided into a combustible gas 11 and a degassed slurry fraction 12, respectively. The slurry fraction is subsequently divided into a dry matter 13 and a liquid fraction 14, respectively, which are further separated into different NPK nutrient products and water.

The energy plant 2 consists of a gas fired 5 and a biomass fired plant 6 where the gas fired unit 5 e.g. comprises a separate gas motor plant or a gas turbine plant coupled in combined cycle with the separate biomass boiler plant.

The separated nutrients from the separation plant are refined and combined according to need in a succeeding fertiliser manufacturing plant 4.

The total plant is placed centrally or locally in association with the communal district heating system with regard to the surrounding area for the organic material and the available openings for the production of electricity and heat.

The plant function may possibly take place as described in the following.

The manure 40 is collected in tank cars or container, depending on the nature of it, and is supplied to the biogas plant 3 in the centrally placed plant in as fresh condition as possible.

In the reception system of the biogas plant, the manure is possibly mixed with waste water sludge and other organic waste products before being supplied to the biogas plant 3.

The degassed product 12 is filtrated and divided by means of a decanting centrifuge and/or a screw separator 7 in a liquid 14 and a dry matter fraction 13, respectively.

The dry matter fraction 13 is subsequently led to the bio boiler plant 6 where the greater part of the phosphorous content after combustion is recovered in the separated ash/slag 16.

The liquid fraction 14 is possibly led to a fine/ultrafine filtration plant, or to a further decanting centrifuge step 8 where a further separation is performed so that a dry matter or sludge product 15 with a relatively great phosphorous content is extracted, which either may be led back to the biogas plant 3 or be extracted with the purpose of being utilised as phosphorous improvement agent. By the processing of the organic material 40 in the biogas plant, a part of the organic bound nitrogen has become released so that the content of the readily accessible ammonia after the biogas plant thereby has become increased.

The liquid 17 with the high ammonia content and content of phosphorous, potassium and other nutrient salt, the liquid 17 being a residual product after the process in the decantation centrifugal step 8, is then led to an ammonia stripper 9 where the ammonia is evaporated and condensed in an ammonia solution 18 under possible simultaneous addition of acid for stabilising the solution.

The ammonia concentrate 18 may then be supplied to the farm land directly by burying or may be further processed by further addition of acid 19 into a stable ammonia product 20 which may either be sprayed directly onto the land with a field sprayer or further processed by evaporation into a crystalline product 21.

The ammonia stripped liquid 22 is led, either to an evaporation plant, a reverted osmosis plant or to an electrodialysis plant 23 whereby a further separation occurs by boiling and distillation into desalinated "pure water" 24 and a nutrient salt solution 25 with a high content of phosphorous, potassium and calcium etc.

The desalinated water 24 may then be drained and used as make-up water for the district heating system 80 i.e. the water may be introduced into the distinct heating system to make up for water loss elsewhere or is further processed in a succeeding mixbed filter 28 according to need for totally desalinated water which is either used in other external processes or is fed to the water/steam system of the turbine plant 33.

The concentrated nutrient salt solution 25 is used directly by burying or spraying on the field, either alone or in a mixture with ammonia concentrate. Also, dehydrating 29 into a crystalline product 30 may be performed, which may either be spread out or further processed 31 into a granulate 32 mixed with the separated ammonia salt 21 or mixed with the ash 16 from the biomass boiler 6. For the further product enrichment, possibly there may be admixed DDSP (Dry DeSulphurication Product from coal fired power plants) for spreading out on land poor in sulphur.

Hereby, it becomes possible to transform the added organic material into an arbitrarily desired fertiliser product which is declared in accordance with the demanded need as usual commercial goods.

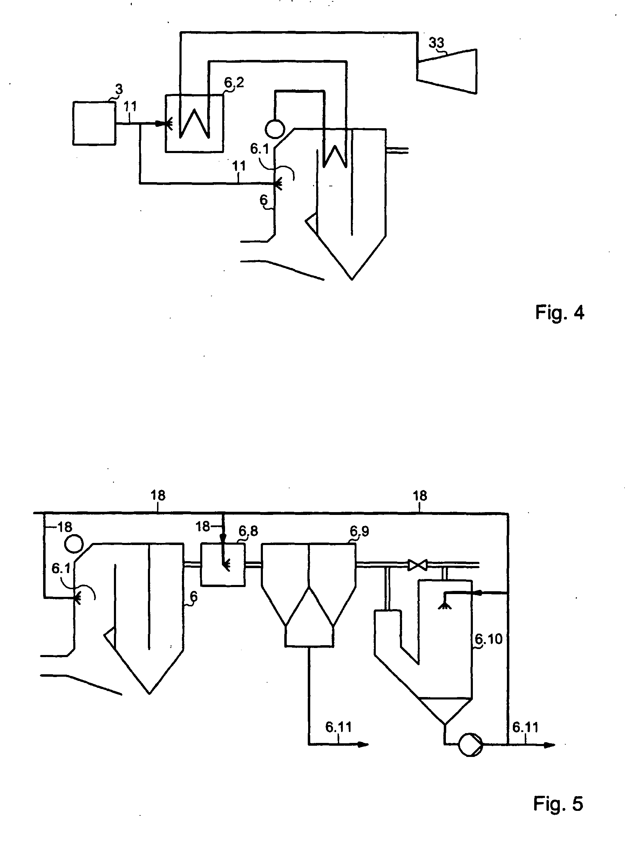

The gas 11 generated from the biogas plant 3 is led on after cleaning, drying and compression in the upgrading plant 34 to the gas turbine plant 5. Alternatively, the gas may be used in a gas motor plant or directly in the firebox or final superheater of the bio boiler plant (see Fig. 4). Furthermore, the upgraded biogas 35 may alternatively be fed into the coupled gas network 50. By the upgrading 34, the biogas 11 is conditioned so that the gas quality is in accordance with the requirements in the subsequent use and handling process with regard to purity, calorific value/wobbe index and dew point properties. The upgrading or conditioning consists of a separation of the biogas 11 whereby unwanted materials like moisture, dust, CO₂ etc. are removed from the biogas 11 so that the methane content and the purity in the gas is thereby increased.

The exhaust gas 31 from the gas turbine 5 is led to the biomass boiler 6 with the purpose of utilising residual heat and oxygen content.

In the bio boiler plant 6, the separated carbon-containing dry matter 13 is converted into energy.

The fuel 13 from the biogas plant 3 is no longer expected to contain corrosive, chloride containing components as these are washed out and separated off in connection with the prior separation and fertiliser production.

The bio boiler plant 6 may advantageously be thus built up so that it is capable of burning off moist fuels, in which moist straw, energy willow, chips and other wood waste products may form part concurrently, as well as alternative fuels 60 together with dedicated bio fuels with great dry matter content like e.g. straw. Thereby the total process integrated plant may achieve a very great fuel flexibility.

A part of the produced ammonia 18 from the separation plant 1 may advantageously be utilised in the flue gas cleaning of the bio boiler, in possible deNOₓ-processes or by absorption of HCl and SO₂ (see Fig. 5).

Likewise, a part of the produced, totally desalinated water 24 and 27 may be used as evaporating agent in the condensation processes of the turbine plant 33, if there is no cooling water available or where the heating basis, e.g. in the summer term, is insufficient compared with the desired electric production.

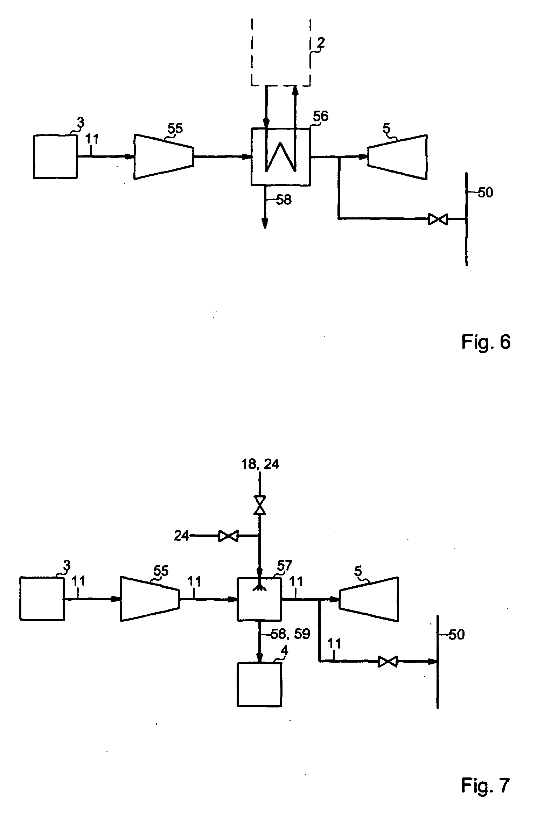

Furthermore, the nutrient salt containing ash 16 from the bio boiler plant 6, the absorption products from the gas cleaning process (58 - Fig. 6; 59 - Fig. 7) and the residues from the flue gas cleaning plant (6.11 - Fig. 5) is transferred for further processing in the fertiliser manufacturing process 4 of the plant.

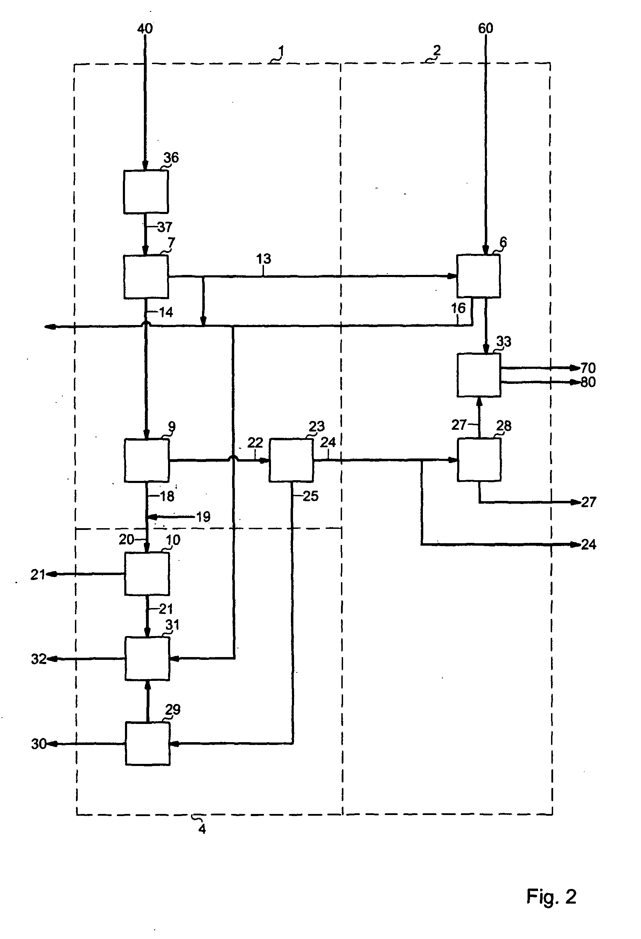

With reference to Fig. 2, the process integrated plant may furthermore function without combination with a biogas plant. The mineral yield from the organic material is, however, thereby reduced due to the diminished biological processing.

The coefficient of utilisation of material may, however, to a certain degree be retained, by the separation plant 1 comprising an initially functioning hydrolysing and/or wet oxidation plant 36 for treating the added organic material 40 under exchange of energy with the steam producing energy plant 2.

The total integrated process plant may thus combine a separation plant 1 containing hydrolysing plant 36, dry matter and liquid separation plant 7, ammonia stripping 9 and evaporation plant 23, a fertiliser manufacturing plant 4 and a steam producing energy plant 2.

The organic material 40 is pumped in hereby from the receiving plant to the hydrolysing plant 36 which is powered by exchange of energy with the steam producing energy plant 2.

The hydrolysed organic material 37 is then supplied to a decantation centrifuge and/or screw separator 7 which separates the material in a dry matter fraction 13 and a liquid fraction 14, respectively.

Alternatively, the organic material 40 may be directly supplied to the dry matter and liquid separator 7 of the separation plant.

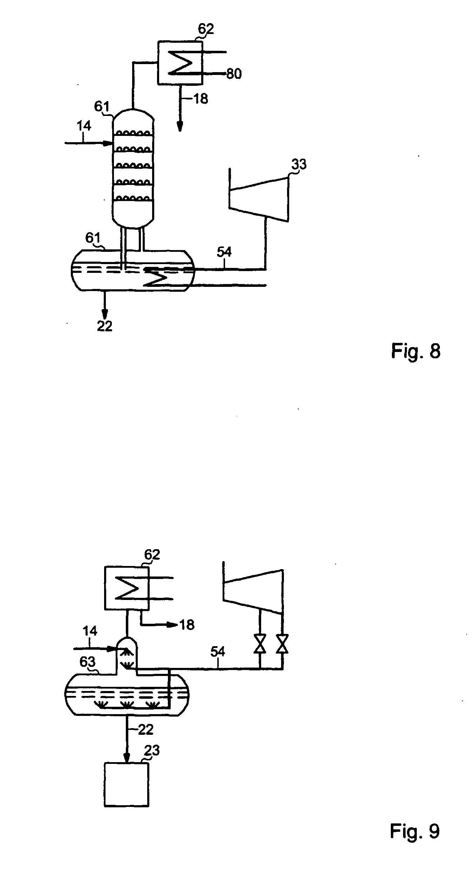

The dry matter fraction 13 is used as fuel in the steam boiler 6 contained in the steam producing energy plant 2, whereas the liquid fraction 14 is fed to an ammonia stripper 9. In order to avoid problems with foam formation, it is suitable to degas the ammonia 18 by direct heat transmission under pressure according to the same principle as the aeration is performed in the water/steam circuit of the energy plant (see Figs. 8 and 9). The ammonia 18 is condensed off subsequently during cooling and possible acid stabilising 19 as ammonia, possibly for further processing in the fertiliser manufacturing plant 4. The condensed ammonia may furthermore be used in the flue gas cleaning process of the bio boiler plant (see Fig. 5).

The ammonia stripped liquid 22 is then dehydrated, possibly by flash evaporation in a multistage evaporator 23, into a concentrated product 25 which subsequently is crystallised under further heat exchange with the steam producing energy plant. The distilled, desalinated water is used in the steam producing energy plant 2 as described in connection with Fig. 1.

The concentrated or crystallised product is used as raw material in the fertiliser manufacturing plant 4 as described in connection with Fig. 1.

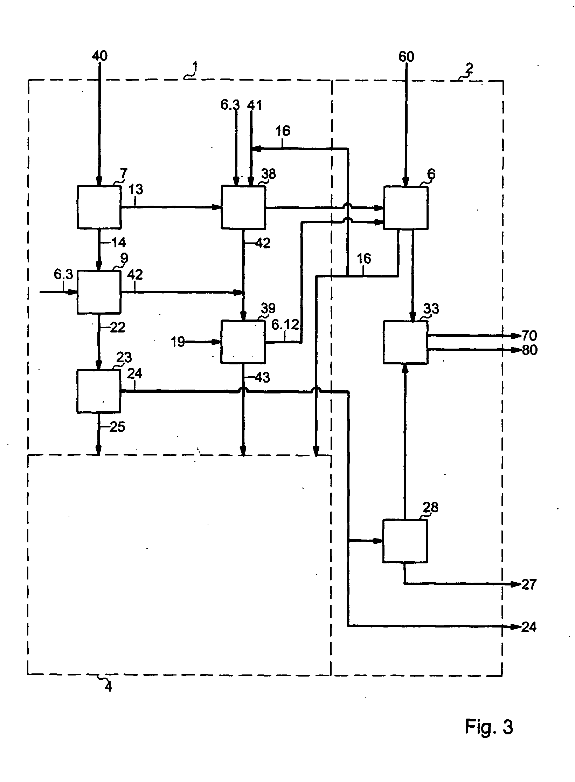

With reference to Fig. 3, there may furthermore be indicated a process where the biogas combination is omitted so that the organic material 40 after the receiving plant is fed directly to the dry matter and liquid separator 7 of the separation plant 1.

The dry matter fraction 13 is then fed to the steam boiler 6 in the steam producing energy plant 2 as fuel after a preceding air drying 38 by means of the combustion air 6.3 of the steam boiler plant, under which simultaneously a composting occurs by converting the readily accessible organic compounds, possibly under simultaneous alkalising with lime 41.

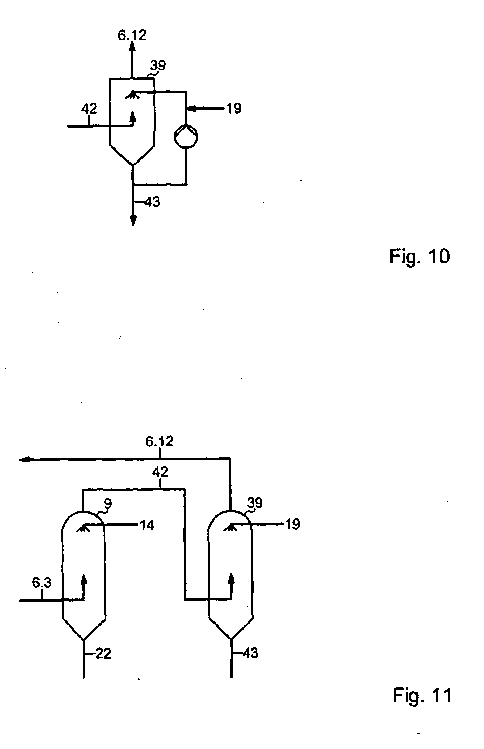

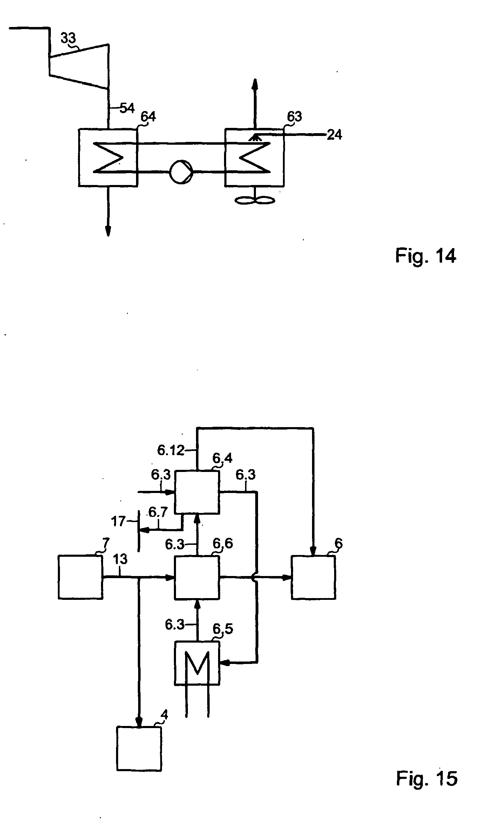

The air stripped ammonia gas 42 is subsequently condensed, possibly through the combustion air preheating of the steam boiler 6 (see Fig. 15), or in a scrubber process 39 under simultaneous addition of acid 19 (see Fig. 10), after which the ammonia salt solution 43 is supplied to the fertiliser manufacturing plant 4 of the plant.

One part of the calcium-containing ash 16 from the steam producing energy plant 2 may hereby be recycled and reused in the composting process 38, while the remaining part is fed to the fertiliser manufacturing plant 4.

The liquid fraction 14 separated off is fed to an ammonia stripper 9 which is either driven by heat exchange with the steam producing energy plant 2, or more suitably by addition of air 6.3.

By using air stripping, the ammonia containing air 42 is supplied from the ammonia stripper 9 to the scrubber plant 39 (see Fig. 11). The ammonia stripped air 6.12 is subsequently used as combustion air in the steam boiler 6 in the steam producing energy plant 2.

The ammonia stripped liquid fraction 22 is fed to an evaporation plant 23, whereby separation into desalinated water 24 and a salt concentrate 25 occurs, which subsequently is further processed in the fertiliser manufacturing plant as described in connection with Fig. 1.

The desalinated water 24 is subsequently used in the water/steam process of the energy plant, also as described in connection to Fig. 1. Alternatively, the total process integrated plant is used for making intermediates in the form of ammonia or ammonia salt solution, nutrient salt solution particularly containing phosphorous and potassium containing ash/slag, which are then transported to further processing at an independent centrally located fertiliser manufacturing plant.

The basis for the functions of the plant is the integrated mutual energy and material flow exchanges occurring between the steam producing energy plants and the associated sub-processes around the biogas-, separation and fertiliser manufacturing plant.

Some of the described integration processes may also advantageously be used under coupling to a common hot water energy plant, where the heat energy is generated in e.g. a gas motor, a boiler plant or by means of other heat producing system in place of the steam producing energy plant, but may not attain so far-reaching advantages in resource, process-economic, environmental and social-structural connections.

The process integration of the plant, i.e. the energy and material flow exchanges between the individual sub-processes, may be described by the following process dependent unit operations:

In general, the biogas plant and the supplied organic material may take advantage of the heat exchange possibilities between the steam producing energy plant under e.g. use of the tap steam of the turbine plant, discharge steam or district heating water in the heating, hygienisation and reactor processes of the biogas plant.

Furthermore, heating of the organic material may occur under use of steam from e.g. the distillation and concentration processes of the separation plant. A particular advantage may simultaneously be achieved by condensing steam by direct supply and admixture with the organic material, as problems with coat and/or foam formations in connection with heating are thereby avoided simultaneously with the supplied amount of liquid being limited with regard to the subsequent separation process, due to the high enthalpy of the steam.

Furthermore, the steam may be fed to the organic material as disinfection agent for disease carrying germs, as e.g. foot-and-mouth disease, BSE, salmonella etc.

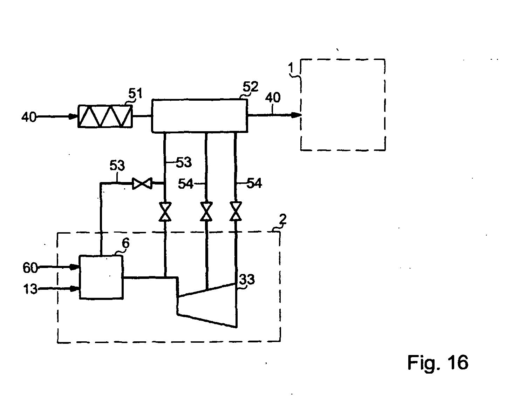

As an example, reference is made to Fig. 16 where the organic material 40 is let in by means of a pump or feeder system 51 to a high pressure container system 52 to which steam 53 is fed from the steam boiler 6 or tap or discharge steam 54 from the connected steam turbine 33. The disinfected material may then be used in the separation plant 1, including the biogas plant 3.

With reference to Fig. 4, the biogas 11 from the biogas plant 3 may be used for combustion in the firebox 6.1 of the steam boiler 6, either by usual fuel supply, as reburning agent in NOₓ-reaction processes, or as fuel in an external biogas fired exit superheater 6.2. Hence, without any risk of high temperature corrosion, the energy plant can be operated at higher temperatures, whereby a higher electric production is achieved in the connected steam turbine 33.

The biogas produced from the biogas plant may be cleaned and upgraded for use in e.g. a gas turbine or fuel exchange with a natural gas distribution system coupled to it.

With reference to Fig. 6, the biogas 11 from the biogas plant 3 may be compressed in a gas compressor 55 and subsequently condense soluble carbon-sulphur products etc. in a gas cooler 56 under possible use of coolant from the steam producing energy plant 2. The upgrade biogas may then be used in the gas turbine 5 or supplied to the gas network 50 connected thereto. The residues 58 separated from the gas cleaning process are utilised in the ammonia stabilising process of the separation plant and in the subsequent fertiliser making process.

With reference to Fig. 7, the gas cleaning may also be performed in a wet scrubber process where the gas 11 from the biogas plant 3 is pressurised in the gas compressor 55, after which it is subjected to pressurised water washing in a scrubber 57 by washing with the water 24 separated as absorption agent from the evaporation, distillation or osmosis process of the separation plant. The acidified washing water 58 is used a acid in the ammonia stabilising process of the separation plant. Alternatively, the separated ammonia solution 18 of the separation plant may be used directly as absorbent. The formed ammonia carbonates 59 are hereby utilised subsequently in the fertiliser manufacture 4 of the plant.

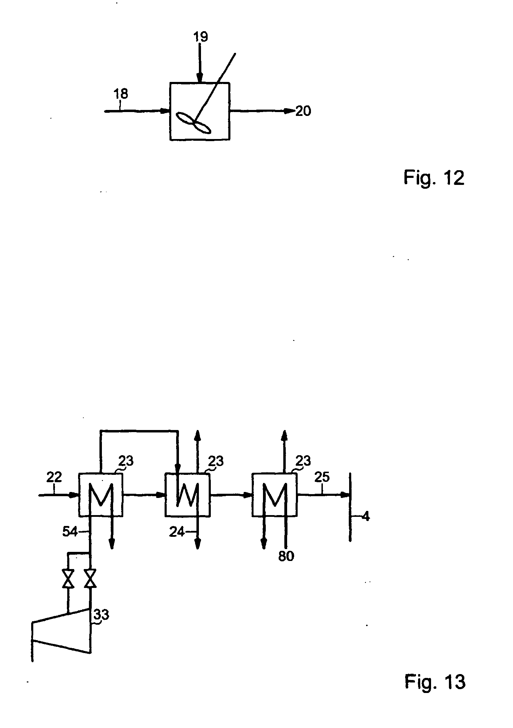

With reference to Fig. 12, the separated acid solution from the gas cleaning process (58 Fig. 6 and 58 Fig. 7) are used for stabilising/neutralising the separated ammonia 18 by conversion into ammonia carbonate 20. The stabilisation/neutralisation may either occur as liquid-to-liquid reaction or by absorption in a gas for liquid reaction as shown in Fig. 10.

The produced biogas may be utilised for energy making in a gas turbine or gas motor coupled thereto, which again may be connected with the steam producing energy plant in e.g. combined cycle and/or under use of the steam boiler as exhaust boiler.

The mechanically separated dry matter from the separation plant may be fed to the steam boiler plant as fuel or alternatively supplied the fertiliser making plant for nutrient enrichment with the purpose of reuse as fertiliser.

The steam producing energy plant 2 may form part of the distillation, evaporation and crystallisation processes of the separation and fertiliser manufacturing plant under the use of steam condensation, condensate or district heating cooling.

With reference to Fig. 13, tap steam/discharge steam 54 is used for heating and evaporation of the ammonia stripped liquid fraction 22 in the evaporation plant 23. Alternatively, district heating water 80 or flue gas condensate from the steam boiler plant 6 is used, possibly under use of vacuum evaporation. The concentrated or dehydrated product 25 is used in the fertiliser manufacturing plant 4.

With reference to Fig. 8, the liquid fraction 14 of the separation plant may e.g. be pumped into a multistage distillation column 61 under heating with steam 54 from the turbine plant 33. The separated ammonia gases are condensed in the condensator 62 under cooling with district heating water 80. The ammonia solution is conducted to the fertiliser manufacturing plant 4, while the salt-containing residue 22 is subsequently concentrated by e.g. evaporation.

Also, with reference to Fig. 9, the liquid fraction 14 of the separation plant may be pumped into an aeration system 63 where the ammonia is evaporated under heating with tap steam 54 from the turbine plant 33. The ammonia gases are subsequently condensed in the condensator 62 and is then conducted to the fertiliser manufacturing plant 4. The degassed liquid 22 is subsequently conducted to the concentration plant 23.

Furthermore, with reference to Fig. 15, the steam producing energy plant may e.g. cooperate at the energy exchanges in thermal drying processes in that the separated dry matter 13 from the separation plant 2 is air dried in the fuel drier 6.6 by means of combustion air 6.3, which is preheated in an air-to-air preheater 6.4, and possibly a water/steam-to-air preheater 6.5, after which the dry matter is led to the steam boiler 6 as fuel. The moisture absorbed in the combustion air in the fuel drier 6.6 is condensed to liquid 6.7 in the air-to-air preheater 6.4 after which it is led back to the liquid process 17 of the separation plant (Fig. 1). The combustion air 6.12 dried by cooling is subsequently used in the combustion process of the steam boiler plant 6.

With reference to Fig. 11, atmospheric air 6.3 may be used for ammonia stripping of the separated liquid 14 in an air stripper 9, after which the ammonia containing air is conducted to an absorber 39 in which the ammonia is absorbed under use of acid 19 as absorbent. The ammonia stripped air 6.12 may then be recirculated or utilised as combustion air in the steam boiler 6. The ammonia stripped, salt-containing liquid 22 is subsequently concentrated, possibly by evaporation, while the absorbed ammonia in the form of ammonia 43 is conducted to the fertiliser manufacturing plant 4.

The steam producing energy plant 2 may also form part of the cooling processes of the separation plant under use of water evaporation, condensate or district heating.

With reference to Fig. 5, the separated ammonia 18 from the separation plant 1 may be used/supplied as NOₓ reducing agent in the firebox 6.1 and flue gas ducts 6.8 of the steam boiler. Furthermore, the ammonia may be used in the flue gas cleaning processes of the steam boiler for acid removal (e.g. HCl and SO₂) both in a semi-dry process by ammonia injection into the flue gas duct 6.8 after which the formed ammonia salts are caught in the dust filter 6.9 of the steam boiler plant, and in a wet flue gas cleaning process where the acidic flue gas is washed with the separated ammonia solution 18 in a wet scrubber 6.10. The nitrogen containing fertiliser product 6.11 formed in connection with the flue gas cleaning process of the steam boiler plant, is returned for subsequent refining in the separation and fertiliser manufacturing plant 4.

The separated ash and slag fractions of the steam boiler plant may also form part of the fertiliser manufacturing process, possibly after preceding washing, extraction or acid opening. Also, a subsequent processing of the ash/slag fraction for recyclable pure materials by using e.g. electrolytic processes.

By reusing the ash/slag fraction of the steam boiler, it will be advantageous to separate off the content of sand (silicon) from the supplied organic material already in the biogas plant or in the plant for receiving the organic material, both out of consideration to a reuse with regard to resources, the mechanical wear in pumps and dry matter separators and with regard to minimising the silicon content in the reproduction process of the fertiliser plant. The tanks of the biogas plant and/or of the receiving plant may thus advantageously be formed with funnelled bottoms from which sedimented sand may be taken out through a mechanical feeder and transport system.

The separated and cleaned water from the separation process may be used both as make-up water in the water/steam circuit in the steam producing energy plant and for make-up in the district heating system coupled thereto on the local combined heating and power plant.

Furthermore, the separated water from the separation process may be constituent as evaporation agent in cooling processes of different kinds in connection with the steam producing energy plant. Referring to Fig. 14, the desalinated/distilled water 24 may be used under simultaneous evaporation in air cooler/cooling tower 63 for condensing the discharge steam 54 of the turbine 33 by cooling water exchange between the cooling tower 63 and the turbine condensator 64.

## Claims

1. A method for an energy, environmental and resource efficient co-production of electricity, heat, fertilisers and water under utilisation of organic material (40) as raw material source, the method comprising using a separation plant (1) in co-production with a steam based energy plant (2), the plants being process integrated, whereby the separating plant separates the raw material into at least a dry matter fraction (13) and a liquid fraction (14), **characterised in that** either the separated liquid fraction (14) from the separation plant (1) is heated by the steam based energy plant (2) whereby the ammonia contained therein evaporates or the separated liquid fraction from the separation plant is stripped of ammonia by means of air.

2. A method according to claim 1 **characterised in that** a biogas plant (3) is incorporated in the process.

3. A method according to claim 1 **characterised in that** a fertiliser producing plant (4) is incorporated in the process.

4. A method according to claim 2, **characterised in that** the biogas (11) derived from the raw material (40) is compressed in a gas compressor and subsequently is washed under pressure by means of water or ammonia separated in the separation plant, whereby the biogas is upgraded under the influence of heat exchange processes between the steam producing energy plant so that the gas quality is brought in accordance with the requirements for the subsequent handling in gas turbine (33) or gas distribution system.

5. A method according to claim 1, 2, 3 or 4, **characterised in that** the separated dry matter fraction from the separation plant (1) goes through a thermal air-drying process (38) by energy transfer from the steam producing energy plant (2) under cooling of condensate, district heating water, steam etc and that the humidified air from the drying process (38) is cooled under liquid condensation by energy transfer to the steam based energy plant (2) under heating of combustion air (6,3), district heating water, condensate, etc.

6. A method according to any of the preceding claims, **characterised in that** the separated ammonia is supplied/injected into a flue gas system provided in the steam based energy plant, whereby it absorbs the content of HiCl and SO₂ via contact with the flue gas content of the steam based energy plant under formation of ammonia chloride and sulphate in a semi-dry or wet absorption process.

7. A method according to any of the preceding claims, **characterised in that** the condensed water/distillate is supplied as make-up water for a district heating system optionally connected to the steam based energy plant or that the condensed water/distillate is supplied as make-up water for the water/steam system of the steam based energy plant.

8. A method according to claim 2, **characterised in that** steam from the steam based energy plant or district heating water of the steam based energy plant is supplied to a heat exchanger system in the biogas plant or introduced directly for heating the added organic material in connection with the hygienification and reactor processes of the biogas plant.

9. A method according to any of the claims 2-7, **characterised in that** the dry matter fraction or the biogas derived from the raw material is used as fuel in the steam based energy plant.

10. A method according to any of the preceding claims, **characterised in that** the separated liquid fraction through liquid evaporation is used as coolant directly in the steam based energy plant or through the district heating system.

11. A method according to any of the preceding claims, **characterised in that** the nutrient salt containing ash from the biogas plant, the absorption products from the gas cleaning process, the residues from the flue gas cleaning plant and/or DDSP is used in the fertiliser manufacturing process.

## Patentansprüche

1. Ein Verfahren zur energiesparenden, umweltschonenden und rohstoffsparenden Co-Produktion von Elektrizität, Wärme, Dünger und Wasser unter Verwendung von organischem Material (40) als Ausgangsmaterialquelle, wobei das Verfahren die Verwendung einer Scheideanlage (1) in Zusammenarbeit mit einem dampfbasierten Kraftwerk (2) umfasst, die Anlagen prozessintegriert sind, wobei die Scheideanlage das Ausgangsmaterial in wenigstens eine Trockensubstanzfraktion (13) und eine flüssige Fraktion (14) auftrennt, **dadurch gekennzeichnet, dass** die abgetrennte flüssige Fraktion (14) aus der Scheideanlage (1) durch das dampfbasierte Kraftwerk (2) erhitzt wird, wobei der hierin enthaltene Ammoniak evaporiert oder die abgetrennte flüssige Fraktion aus der Scheideanlage mittels Luft von dem Ammoniak befreit wird.

2. Ein Verfahren gemäß Anspruch 1,
**dadurch gekennzeichnet, dass**
eine Biogasanlage (3) in den Prozess integriert ist.

3. Ein Verfahren gemäß Anspruch 1,
**dadurch gekennzeichnet, dass**
eine düngerproduzierende Anlage (4) in den Prozess integriert ist.

4. Ein Verfahren gemäß Anspruch 2,
**dadurch gekennzeichnet, dass**
das Biogas (11), welches aus dem Rohmaterial (40) stammt, in einem Gaskompressor komprimiert wird und nachfolgend unter Druck mittels Wasser oder Ammoniak, der in der Scheideanlage abgetrennt wurde, gewaschen wird, wobei das Biogas unter den Einfluss der wärmeaustauschenden Prozesse zwischen dem dampfproduzierenden Kraftwerk aufgewertet wird, so dass die Gasqualität mit den Anfordernissen für die nachfolgende Handhabung in der Gasturbine (33) oder dem Gasverteilungssystem in Einklang gebracht wird.

5. Ein Verfahren gemäß den Ansprüchen 1, 2, 3 oder 4,
**dadurch gekennzeichnet, dass**
die abgetrennte Trockensubstanzfraktion aus der Scheideanlage (1) einen thermischen Lufttrocknungsprozess (38) durch Energieübertragung aus dem dampfproduzierenden Kraftwerk (2) durch Abkühlen des Kondensats, des umgebenden Heizwassers, des Dampfes usw. durchläuft und dass die angefeuchtete Luft aus dem Trocknungsprozess (38) unter Flüssigkeitskondensierung durch Energieübertrag an das dampfbasierte Kraftwerk (2) durch Erhitzen der Verbrennungsluft (6, 3), des umgebenden Heizwassers, des Kondensates usw. abgekühlt wird.

6. Ein Verfahren nach einem der vorangegangenen Ansprüche,
**dadurch gekennzeichnet, dass**
der abgetrennte Ammoniak in ein Abgassystem eingeführt/eingespritzt wird, welches in dem dampfbasierten Kraftwerk vorhanden ist, wobei er den Gehalt an HCL und SO₂ über den Kontakt mit dem Abgasgehalt des dampfbasierten Kraftwerkes unter Bildung von Ammoniumchlorid und Sulfat in einem semi-trockenen oder nassen Absorbtionsprozess aufnimmt.

7. Ein Verfahren gemäß einem der vorangegangenen Ansprüche,
**dadurch gekennzeichnet, dass**
das kondensierte Wasser/Destillat als Ersatzwasser für ein umgebendes Wärmesystem eingesetzt wird, welches ggf. an das dampfbasierte Kraftwerk angeschlossen ist oder dass das kondensierte Wasser/Destillat als Ersatzwasser für das Wasser/Dampfsystem des dampfbasierten Kraftwerkes eingesetzt wird.

8. Ein Verfahren gemäß Anspruch 2,
**dadurch gekennzeichnet, dass**
Dampf aus dem dampfbasierten Kraftwerk oder umgebendes Heizwasser aus dem dampfbasierten Kraftwerk einem Wärmeaustauschsystem in der Biogasanlage zugeführt wird oder direkt zur Erhitzung des zugegebenen organischen Materials in Verbindung mit der Aufbereitung und dem Reaktorprozess der Biogasanlage eingesetzt wird.

9. Ein Verfahren gemäß einem der Ansprüche 2 bis 7,
**dadurch gekennzeichnet, dass**
die Trockensubstanzfraktion und das Biogas, welches aus dem Ausgangsmaterial stammt, als Kraftstoff in dem dampfbasierten Kraftwerk verwendet wird.

10. Ein Verfahren gemäß einem der vorangegangenen Ansprüche,
**dadurch gekennzeichnet, dass**
die abgetrennte flüssige Fraktion durch Flüssigkeitsverdunstung als Kühlmittel direkt in dem dampfbasierten Kraftwerk oder auch dem umgebenden Heizsystem eingesetzt wird.

11. Ein Verfahren gemäß einem der vorangegangenen Ansprüche,
**dadurch gekennzeichnet, dass**
das Nährstoffsalz, welches in der Asche aus der Biogasanlage enthalten ist, die Absorbtionsprodukte aus dem Gasreinigungsprozess, die Reste aus der abgasreinigenden Anlage und/oder DDSP zur Herstellung in einem Düngererzeugungsverfahren eingesetzt werden.

## Revendications

1. Procédé pour la coproduction d'électricité, de chaleur, d'engrais et d'eau efficace au plan de l'énergie, de l'environnement et des ressources en utilisant un matériau organique (40) sous la forme d'une source de matière première, le procédé comprenant l'utilisation d'une installation de séparation (1) en coproduction avec une installation énergétique (2) opérant à la vapeur d'eau, les installations étant intégrées au procédé, si bien que l'installation de séparation sépare la matière première en au moins une fraction de matière sèche (13) et une fraction de liquide (14), **caractérisé en ce que** la fraction de liquide séparée (14) de l'installation de séparation (1) est chauffée par l'installation énergétique (2) opérant à la vapeur d'eau, si bien que l'ammoniac qui y est contenu s'évapore ou que la fraction de liquide séparée issue de l'installation de séparation est strippée de l'ammoniac au moyen d'air.

2. Procédé selon la revendication 1, **caractérisé en ce que** l'installation de biogaz (3) est incorporée au procédé.

3. Procédé selon la revendication 1, **caractérisé en ce que** l'installation de production d'engrais (4) est incorporée au procédé.

4. Procédé selon la revendication 2, **caractérisé en ce que** le biogaz (11) issu de la matière première (40) est comprimé dans un compresseur à gaz et est ensuite lavé sous pression au moyen d'eau ou d'ammoniac séparé dans l'installation de séparation, si bien que le biogaz est ennobli sous l'influence de procédés d'échange de chaleur entre l'installation énergétique produisant de la vapeur d'eau de sorte que la qualité du gaz devienne conforme aux exigences de manipulation ultérieure dans la turbine à gaz (33) ou dans le système de distribution de gaz.

5. Procédé selon la revendication 1, 2, 3 ou 4, **caractérisé en ce que** la fraction de matière sèche séparée issue de l'installation de séparation (1) passe par un procédé de séchage à l'air thermique (38) par transfert d'énergie de l'installation énergétique (2) producteur de vapeur d'eau par refroidissement de condensat, d'eau de chauffage urbain, de vapeur d'eau, etc., et l'air humidifié issu du procédé de séchage (38) est refroidi par condensation de liquide par transfert d'énergie à l'installation énergétique (2) opérant à la vapeur d'eau par chauffage d'air de combustion (6, 3), d'eau de chauffage urbain, de condensat, etc, ...

6. Procédé selon l'une quelconque des revendications précédentes, **caractérisé en ce que** l'ammoniac séparé est acheminé/injecté dans un système de gaz de combustion mis en oeuvre dans l'installation énergétique opérant à la vapeur d'eau, si bien qu'il absorbe la teneur en HCl et en SO₂ par contact avec la teneur en gaz de combustion de l'installation énergétique opérant à la vapeur d'eau en formant du chlorure et du sulfate d'ammoniac dans un processus d'absorption demi-sec ou humide.

7. Procédé selon l'une quelconque des revendications précédentes, **caractérisé en ce que** l'eau condensée ou le distillat est acheminé(e) comme eau d'appoint pour un système de chauffage urbain éventuellement raccordée à l'installation énergétique opérant à la vapeur d'eau ou l'eau condensée ou le distillat est acheminé(e) comme eau d'appoint pour le système d'eau/vapeur d'eau de l'installation énergétique opérant à la vapeur d'eau.

8. Procédé selon la revendication 2, **caractérisé en ce que** la vapeur d'eau issue de l'installation énergétique opérant à la vapeur d'eau ou l'eau de chauffage urbain de l'installation énergétique opérant à la vapeur d'eau est acheminée à un système échangeur de chaleur dans l'installation de biogaz ou introduite directement en vue de chauffer le matériau organique ajouté en liaison avec les procédés d'hygiénisation ou de réaction de l'installation de biogaz.

9. Procédé selon l'une quelconque des revendications 2 à 7, **caractérisé en ce que** la fraction de matière sèche ou le biogaz issu de la matière première est utilisé(e) comme combustible dans l'installation énergétique opérant à la vapeur d'eau.

10. Procédé selon l'une quelconque des revendications précédentes, **caractérisé en ce que** la fraction liquide séparée par évaporation de liquide est utilisée comme réfrigérant directement dans l'installation énergétique opérant à la vapeur d'eau ou par le système de chauffage urbain.

11. Procédé selon l'une quelconque des revendications précédentes, **caractérisé en ce que** l'on utilise les cendres contenant du sel nutritif de l'installation de biogaz, les produits d'absorption du processus d'épuration de gaz, les résidus de l'installation de nettoyage de gaz de combustion et/ou le DDSP dans le procédé de fabrication d'engrais.
